(19) Europäisches Patentamt / European Patent Office / Office européen des brevets

(11) **EP 2 004 360 B1**

(12) **FASCICULE DE BREVET EUROPEEN**

(45) Date de publication et mention
de la délivrance du brevet:
**23.03.2011 Bulletin 2011/12**

(51) Int Cl.:
***B23K 26/38*** *(2006.01)*     ***B23K 26/06*** *(2006.01)*
***B23K 26/14*** *(2006.01)*

(21) Numéro de dépôt: **07731503.4**

(22) Date de dépôt: **22.01.2007**

(86) Numéro de dépôt international:
**PCT/FR2007/050673**

(87) Numéro de publication internationale:
**WO 2007/088295 (09.08.2007 Gazette 2007/32)**

(54) **PROCÉDÉ DE COUPAGE AVEC UN LASER AYANT AU MOINS UNE FIBRE À BASE D'YTTERBIUM AVEC CONTRÔLE D'AU MOINS DE LA PUISSANCE DE LA SOURCE LASER, DU DIAMÈTRE DU FAISCEAU FOCALISÉ ET DU FACTEUR QUALITÉ DU FAISCEAU**

EINEN LASER MIT MINDESTENS EINER AUF YTTERBIUM BASIERENDEN FASER VERWENDENDES SCHNEIDVERFAHREN, BEI DEM MINDESTENS DIE ENERGIE DER LASERQUELLE, DER DURCHMESSER DES FOKUSSIERTEN STRAHLS UND DER STRAHLQUALITÄTSFAKTOR GESTEUERT WERDEN

CUTTING METHOD USING A LASER HAVING AT LEAST ONE YTTERBIUM-BASED FIBRE, IN WHICH AT LEAST THE POWER OF THE LASER SOURCE, THE DIAMETER OF THE FOCUSED BEAM AND THE BEAM QUALITY FACTOR ARE CONTROLLED

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **03.02.2006 FR 0650382**

(43) Date de publication de la demande:
**24.12.2008 Bulletin 2008/52**

(73) Titulaires:
• **L'AIR LIQUIDE, Société Anonyme pour l'Etude et l'Exploitation des Procédés Georges Claude**
**75007 Paris (FR)**
• **AIR LIQUIDE WELDING FRANCE**
**75007 Paris (FR)**

(72) Inventeurs:
• **BRIAND, Francis**
**F-75009 Paris (FR)**

• **CHOUF, Karim**
**F-95160 Montmorency (FR)**
• **MAAZAOUI, Hakim**
**F-75009 Paris (FR)**
• **VERNA, Eric**
**F-95650 Boissy l'Aillerie (FR)**

(74) Mandataire: **Pittis, Olivier**
**L'Air Liquide S.A.**
**75, quai d'Orsay**
**75321 Paris Cedex 07 (FR)**

(56) Documents cités:
| | |
|---|---|
| EP-A- 1 607 487 | EP-A- 1 790 427 |
| EP-A2- 0 374 741 | DE-A1-102004 024 475 |
| DE-A1-102004 027 625 | US-A1- 2003 055 413 |
| US-A1- 2003 189 959 | US-B1- 6 208 458 |

**Description**

L'invention porte sur un procédé de coupage par faisceau laser d'une pièce à couper conformément au préambule de la revendication 1 (voir, par exemple, DE-A-102004 024475), utilisant une source laser de type fibre à base d'ytterbium.

Le coupage par faisceau laser en utilisant une source laser de type $CO_2$, pour générer un faisceau laser de longueur d'onde égale à 10.6 $\mu$m, d'une puissance allant jusqu'à 6 kW actuellement, est largement répandu dans l'industrie car ce type de source donne de bonnes caractéristiques de faisceau, à savoir un bon facteur de qualité ($M^2$, BPP...) et une bonne répartition spatiale de l'énergie (TEM01*).

Il est possible avec ces sources lasers de type $CO_2$ de couper les métaux et leurs alliages, tels l'aluminium et ses alliages, l'acier inoxydable, l'acier carbone, l'acier doux..., ou tout autre matériau non-métallique, tel que le bois, le carton, les céramiques.

Cependant, les vitesses de coupe qui peuvent être atteintes et la qualité de coupe qui en résulte sont très variables selon le matériau à couper et, par ailleurs, selon les paramètres du procédé de coupage adoptés, tels que nature du gaz d'assistance, diamètre du faisceau focalisé et puissance du laser incidente. De plus, le chemin optique doit impérativement être maintenu dans une atmosphère inerte pour éviter toute pollution et conserver un milieu d'indice optique constant nécessaire à la bonne propagation du faisceau.

Pour tenter de pallier ces problèmes, il a été proposé d'utiliser en découpe laser, des dispositifs laser de type Nd:YAG. Dans ce cas, le résonateur générant le faisceau contient un milieu amplificateur solide, qui est un barreau de néodyme (Nd), et le faisceau ainsi obtenu est ensuite convoyé jusqu'à la tête de focalisation via une fibre optique.

Cependant, cette solution n'est pas non plus satisfaisante au plan industriel car elle donne de mauvais résultats en termes de qualité et de vitesse de découpe, non seulement du fait de facteurs de qualité (BPP) du faisceau inadaptés à la découpe laser mais aussi d'une répartition transversale de l'énergie dans le faisceau non gaussienne mais en créneau (appelé « *top hat* » en anglais), voire même aléatoire au-delà du point de focalisation.

Par ailleurs, le document DE-A-102004024475 décrit un procédé de coupage par laser Ytterbium à une longueur d'onde de 1115 à 1125 nm et à une puissance de moins de 200 W d'éléments semi-conducteurs ayant une épaisseur allant jusqu'à 600 $\mu$m.

Le document US-A-2003/199859 porte sur un système laser à impulsions courtes, notamment à amplificateur de type Yb :YAG pouvant produire des impulsions laser de durée allant de 0.05 à moins de 10 picoseconde et de largeur de bande de 1.5 à 35 nm pour donner une taille de spot de 0.406 mm de diamètre.

En outre, le document US-A-73695S2 enseigne un amplificateur laser à fibre d'ytterbium à haute puissance de longueur d'onde laser entre 1060 et 1100 nm, de puissance d'au moins 500 W et ayant une qualité de faisceau très limitée en diffraction ($M^2$<1.5), alors que le document US-A-6723090 porte sur un dispositif laser Ytterbium ayant également une qualité de faisceau encore plus limitée en diffraction ($M^2$<1.05).

Enfin, le document US-A-6181463 décrit aussi un amplificateur laser à fibre pour convertir les pulsations de basse intensité en pulsations ultra-courtes de haute énergie.

Le problème qui se pose est alors de proposer un procédé de découpe par faisceau laser amélioré, lequel ne présente pas les inconvénients et limitations susmentionnés, et qui puisse permettre d'atteindre, selon l'épaisseur considérée, des vitesses allant jusqu'à 15 à 20 m/min, voire plus élevées, et une bonne qualité de coupe, c'est-à-dire des faces de coupe droites, sans bavure, avec une rugosité limitée.

La solution de l'invention est alors un procédé de coupage par faisceau laser, dans lequel on utilise des moyens de génération de faisceau laser comprenant au moins une fibre contenant de l'ytterbium pour générer un faisceau laser servant à fondre la pièce et à ainsi réaliser la découpe proprement-dite.

Plus précisément, l'invention porte sur un procédé de coupage par faisceau laser d'une pièce à couper, dans lequel on utilise des moyens de génération de faisceau laser comprenant au moins une fibre contenant de l'ytterbium ayant une longueur d'onde entre 1 et 4 $\mu$m pour générer le faisceau laser d'une puissance comprise entre 0,1 et 40 kW.

Selon l'invention, le faisceau laser est sélectionné de manière à présenter :

- une densité de puissance entre 1,5 et 20 MW/cm$^2$,
- un diamètre de faisceau focalisé entre 0,1 mm et 0,50 mm, et
- un facteur de qualité (BPP) entre 2 et 8 mm.mrad.

De plus, selon l'invention, les moyens de génération de faisceau laser comprennent au moins un élément excitateur, de préférence plusieurs éléments excitateurs, coopérant avec au moins un élément excité, encore appelé milieu amplificateur, pour générer le faisceau laser. Les éléments excitateurs sont préférentiellement plusieurs diodes laser, alors que le ou les éléments excités est ou sont une ou préférentiellement des fibres à coeur d'ytterbium, de préférence en silice.

En outre, dans le cadre de l'invention, on utilise indifféremment les termes « moyens de génération de faisceau laser » et « résonateur ». Ce type de source laser est habituellement appelé source laser « à fibre » où « à fibre d'ytterbium » puisque leur milieu amplificateur est un réseau de fibres optiques particulières dont le coeur ou noyau est à base d'ytterbium.

Selon le cas, le procédé de l'invention peut comprendre l'une ou plusieurs des caractéristiques suivantes :

- la (ou les) fibre(s) est formée d'un coeur dopé à l'ytterbium recouvert de silice.
- le faisceau laser généré par la fibre à base d'ytterbium a une longueur d'onde entre 1.04 et 3 $\mu$m, de préférence entre 1.07 et 1.1 $\mu$m, préférentiellement égale à 1.07 $\mu$m.
- le faisceau laser a une puissance comprise entre 0.5 et 15 kW.
- le faisceau laser est continu ou pulsé, de préférence continu.
- la vitesse de coupe est comprise entre 0.1 et 20 m/min, de préférence de 1 à 15 m/min.
- le gaz d'assistance du faisceau laser est choisi parmi l'azote, l'hélium, l'argon, l'oxygène, le $CO_2$ et leurs mélanges, et éventuellement, il contient, en outre, un ou plusieurs composés additionnels choisis parmi $H_2$ et $CH_4$.
- plus généralement, la pression de gaz d'assistance est comprise entre environ 0,1 bar et 25 bar, et est choisie en fonction de l'épaisseur à couper.
- le diamètre de l'orifice d'injection du gaz est compris entre 0,5 et 5 mm. typiquement entre 1 et 3 mm.
- le facteur de qualité du laser (BPP) est compris entre 2 et 6 mm.mrad.
- le diamètre de faisceau focalisé est compris entre 0,13 mm et 0,40 mm.
- le faisceau laser a une valeur de longueur de Raleigh (Zr) comprise entre 1 et 10 mm, de préférence entre 2 et 7 mm.
- l'on met en oeuvre le faisceau selon une ouverture angulaire ($\theta$) compris entre 0,25 et 5°, et un angle ($\alpha$) entre 1,25 et 8° correspondant à l'angle définit par le diamètre du faisceau laser focalisé ($2W_0$) divisé par l'épaisseur (E) de la tôle, tels que la somme des angles ($\alpha + \theta$) soit comprise entre 1,5 et 8°.
- la pièce à couper à une épaisseur entre 0.25 et 30 mm, de préférence entre 0.40 et 20 mm.

En fait, les principales caractéristiques du rayonnement laser qui interviennent sur le processus de découpe sont la longueur d'onde du laser, le facteur de qualité du faisceau ($M^2$, K, BPP), le diamètre du faisceau mesuré en sortie de la source, la puissance laser incidente, et son mode de focalisation au voisinage de la surface du matériau à couper

La longueur d'onde des sources laser à « fibre » d'ytterbium est généralement proche de celle des laser Nd : YAG, à savoir de l'ordre de 1.07 $\mu$m.

En général, pour ce type de source laser à fibre à ytterbium, on utilise le paramètre BPP, pour « Beam Parameter Product » (produit des paramètres de faisceau), pour caractériser la qualité du faisceau. Le BPP est défini comme étant le produit du diamètre du faisceau au diamètre minimal du faisceau (ou *waist* en anglais) par son angle de divergence. Le BPP est exprimé en mm.mrad. Plus le BPP est petit, plus la qualité du faisceau est bonne.

D'un point de vue industriel, ces sources laser à fibre d'ytterbium présentent l'avantage de se propager jusqu'au système de focalisation à travers une fibre optique près de la zone de travail, tout en conservant une bonne qualité de faisceau. Le diamètre du faisceau disponible en sortie de source est alors égal au diamètre utile de la fibre optique qui le transporte.

Les puissances et les facteurs de qualité de ces faisceaux sont satisfaisants pour le processus de découpe laser, en particulier en termes de vitesse et de qualité de coupe. Les puissances disponibles avec ce type de source sont comprises entre 100 W et 40 kW et leurs facteurs de qualité (BPP) varient entre 0.3 mm.mrad et 15 mm.mrad. En outre, le diamètre de la fibre optique de propagation change avec la puissance laser qu'elle doit délivrer. Plus la puissance est élevée, plus le diamètre de fibre est grand.

Ainsi, par exemple, pour une puissance de 2 kW, la fibre utilisée aura un diamètre de 50 $\mu$m et un BPP de 2 mm.mrad, alors que pour 4kW, son diamètre sera de 100 $\mu$m et son BPP de 4 mm.mrad.

Par ailleurs, quel que soit le type source utilisée, le faisceau laser issu de la source doit être focalisé par des moyens de focalisation, tels qu'une lentille ou un système optique particulier, par exemple des miroirs. Suivant les propriétés de la lentille utilisée, les caractéristiques du faisceau focalisées changent, entraînant une modification des performances de découpe laser. Le choix d'une lentille et de sa mise en oeuvre pour focaliser le faisceau font partie des connaissances générales de l'homme du métier.

En pratique, on fait varier le BPP de la source laser fibre en jouant avec le nombre de fibres élémentaires contenues dans la source générant le faisceau laser. En effet, chacune des fibres élémentaires donne en général un faisceau mono-mode de BPP de l'ordre de 0,3 mm.mrds. De là, leur nombre et leur combinaison par « mise en fagot » donnent des BPP différents. Ces laser-fibres élémentaires sont, à leur tour, injectés dans une fibre optique de propagation par différents moyens. Plus le diamètre de cette fibre optique de propagation est important, plus le BPP du faisceau de sortie augmente. On peut ainsi pour une puissance donnée faire varier le BPP dans une plage assez large et donc choisir le BPP que l'on souhaite, à savoir un BPP selon l'invention de moins de 10 mm.mrad, de préférence entre 1 et 8 mm.mrad, voire de préférence encore entre 2 et 6 mm.mrad.

La focalisation de ce faisceau sur le matériau à couper se fait en général grâce à 2 lentilles optiques dont les caractéristiques sont déterminées empiriquement par l'homme de l'art pour obtenir sur la pièce une tâche focale de diamètre voulu, à savoir un diamètre de faisceau focalisé d'au moins 0,1 mm. Ce diamètre est en général dépendant du diamètre de sortie de la fibre de propagation, des distances focales choisies et du BPP à la sortie de la fibre.

Enfin, la densité de puissance moyenne est le rapport entre la puissance du faisceau laser et la surface de la tâche focale obtenue avec ce faisceau laser, donc dépend essentiellement du diamètre de la tâche focale. Déterminer ces paramètres ne pose pas de difficulté particulière à un homme du métier.

Il s'ensuit qu'un faisceau laser focalisé possède toujours une ouverture angulaire (2θ) qui est définie comme suit :

$$\tan(\theta) = \frac{D/2}{F}$$

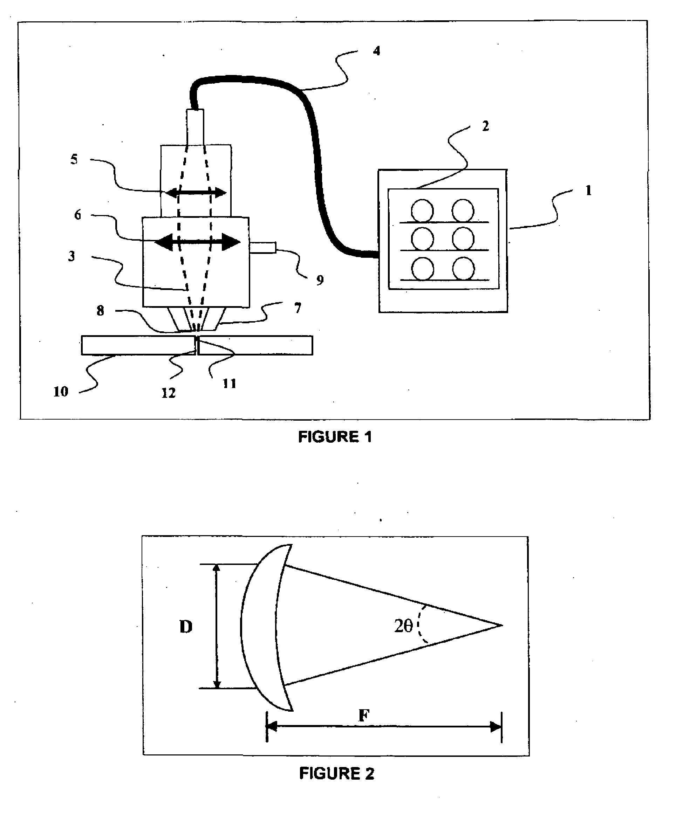

où : D est le diamètre du faisceau incident à la surface de la lentille et F sa longueur focale, comme schématisé sur la Figure 2.

Les performances du processus de découpe laser sont directement dépendantes de l'absorption de l'énergie laser par le matériau. Cette absorption est fonction de la nature du matériau à couper, des caractéristiques du faisceau laser notamment de la longueur d'onde, comme expliqué précédemment, mais aussi de l'angle d'incidence entre le faisceau, le matériau à couper et sa polarisation.

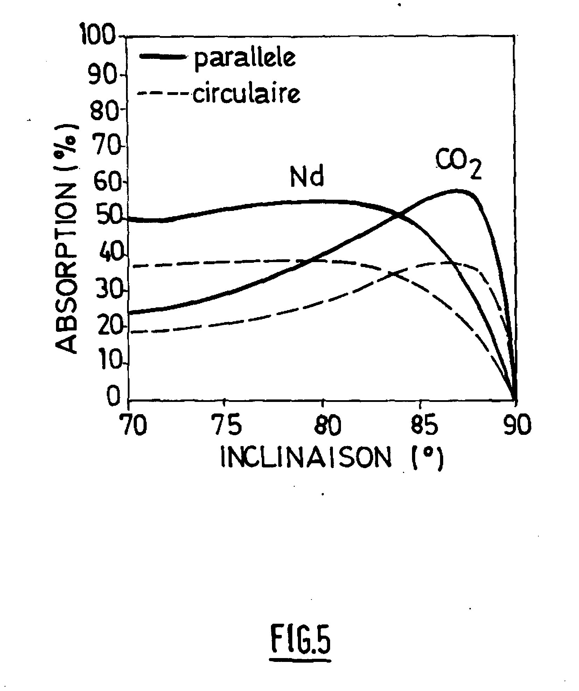

Ainsi, la figure 5 présente l'évolution de l'absorption d'un faisceau laser $CO_2$ ou Nd :YAG en fonction de son angle d'incidence et de sa polarisation, comme expliqué par Laser with different wavelength - implication for various application; F. Dausinger ; Universität Stuttgart, ECLAT 90 ; Vol. 1: 3rd Conference on Laser Treatment of Materials ; p 1-14.

La longueur d'onde de 1.07 $\mu$m du laser à fibre d'ytterbium très voisine de celle de 1.06$\mu$m du laser Nd :YAG laisse présager d'une absorption d'énergie similaire au Nd:YAG, maximale avec un angle d'incidence différent de celui d'un laser $CO_2$.

Lors du processus de découpe, il s'établit une zone frontière stationnaire entre le métal solide et le métal liquide, appelée 'front avant' de découpe. Ce front avant s'établit, en fonction de la vitesse d'avance et des caractéristiques du faisceau avec un angle α invariant tout au long de la coupe.

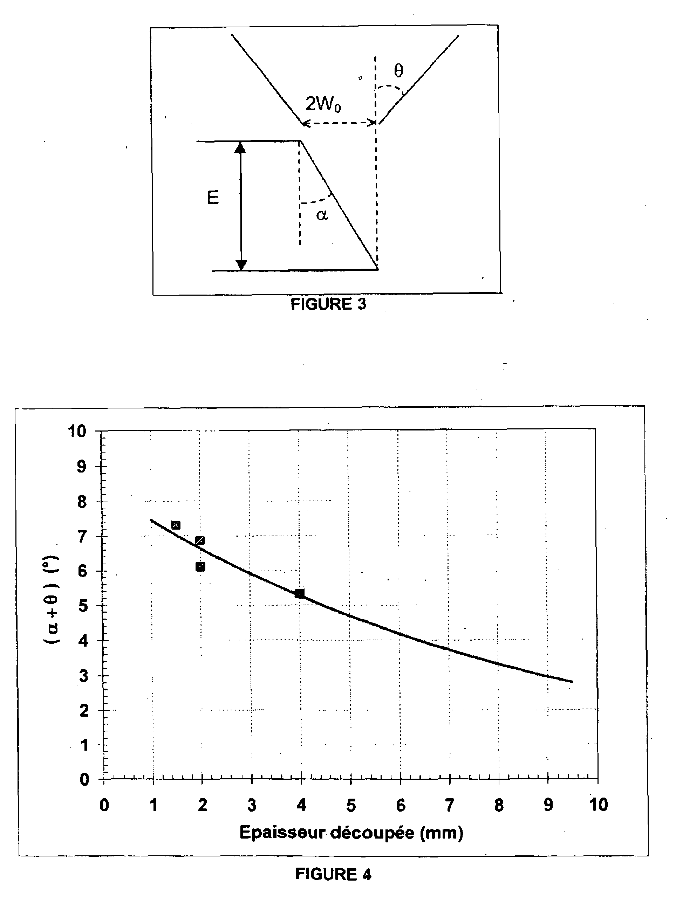

On définit l'angle α maximal, schématisé dans la figure 3, comme une grandeur théorique correspondant à l'angle atteint par le front avant de métal en fusion pendant la découpe et ce, à la vitesse de coupe maximale choisie, telle que :

$$\tan(\alpha) = \frac{2W_0}{E}$$

où : (2.$W_0$) correspond au diamètre minimum du faisceau focalisé et E à l'épaisseur de la pièce à couper.

Plus la tôle à couper est épaisse (E), pour un faisceau laser donné, plus la valeur de l'angle α est faible. Plus la tache focale est grande, pour une épaisseur de matériau à couper donnée, plus la valeur de l'angle α est élevée.

L'angle maximal d'incidence du faisceau par rapport au front avant est donc défini par l'angle (α + θ). Cet angle correspond en quelque sorte à l'angle du rayon extrême du faisceau laser avec le front avant de découpe.

Un autre aspect important dans le processus de découpe est la capacité de distribuer, sans grande variation, l'énergie laser au coeur de l'épaisseur du matériau. La longueur de Raleigh, ou profondeur de champ, est la distance du « waist » dans l'axe de propagation du faisceau dans laquelle le diamètre du faisceau n'augmente pas plus de 5%.

On considère que, dans cette région, la distribution d'énergie n'évolue pas de manière significative et que cette valeur doit être reliée à l'épaisseur du matériau à découper.

La distance de Raleigh Zr peut être reliée au facteur de qualité du faisceau BPP par la relation suivante :

$$Zr = \frac{W_0{}^2}{BPP}$$

dans laquelle $\omega_0$ est le diamètre du faisceau au « waist ».

Il est donc primordial de prendre en compte le facteur de qualité et donc la longueur de Raleigh si l'on souhaite améliorer le procédé de découpe.

On comprend alors qu'il convient également de prendre en compte le diamètre du faisceau laser focalisé Φ pour pouvoir espérer améliorer le processus de découpe car ce paramètre influe directement sur l'angle α et par conséquent sur l'absorption du faisceau au travers de la somme α + θ.

Partant de là, en s'intéressant tout particulièrement à ces différents paramètres, on a réalisé les essais comparatifs consignés ci-après en adoptant notamment les paramètres et conditions donnés dans le Tableau ci-dessous.

Durant ces essais, on a utilisé l'installation schématisée sur la Figure 1 pour réaliser le coupage par faisceau laser 3 d'une pièce 10 en acier inoxydable. Cette installation comprend une source laser 1 de 2kW à résonateur 2 ou moyens de génération de faisceau laser comprenant une fibre en silice à coeur dopé à l'ytterbium pour générer un faisceau laser 3 de longueur d'onde de 1.07 μm.

Le faisceau 3 se propage à travers des moyens de convoyage de faisceau 4, telle qu'une fibre optique en silice fondue de diamètre de 50 μm ou 100 μm, selon le cas, jusqu'à la zone d'interaction 11 entre le faisceau 3 et la pièce 10 où le faisceau va frapper la pièce à couper et fondre le matériau constitutif de ladite pièce en formant ainsi progressivement la saignée de coupe par déplacement du front avant.

En sortie de cette fibre 4, le faisceau laser 3 possède des caractéristiques optiques particulières et un facteur de qualité (BPP) de 2 ou 4,2 mm.mrad, respectivement (±0.2mm.mrad) selon le diamètre de fibre considéré. Le faisceau 3 est ensuite collimaté avec un collimateur optique 5 équipé d'un doublet de collimation en silice fondu revêtue de manière à limiter la divergence du faisceau en sortie de fibre et le rendre le faisceau laser parallèle.

Le faisceau 3 parallèle selon le principe schématisé sur les Figures 2 et 3, est ensuite focalisé sur ou dans la pièce 10 à couper d'épaisseur E par une lentille 6 en silice fondue revêtue de longueur focale comprise entre 5 mm et 7,5 mm, comme donné dans le Tableau ci-après. Avant de venir frapper la pièce 10, le faisceau 3 traverse axialement la tête laser 5 équipée d'une buse 7 comprenant un orifice 8 de sortie axial situé en regard de la pièce à couper 10 par lequel passent le faisceau 3 et le gaz d'assistance. L'orifice de la buse peut être compris entre 0.5 mm et 5 mm, de préférence entre 1 mm et 3 mm.

La tête laser 5 est alimentée, quant à elle, en gaz d'assistance via une entrée 9 de gaz, par exemple un gaz inerte tel l'azote, l'argon, l'hélium ou un mélange de plusieurs de ces gaz, ou alors un gaz actif, tel l'oxygène par exemple, voire des mélanges de gaz actif et de gaz inerte ; le choix du gaz à utiliser se faisant en fonction du matériau à couper.

Le gaz d'assistance sous pression sert à évacuer le métal en fusion hors de la saignée 12 de coupe se formant dans la pièce 10, lors du déplacement relatif de la pièce par rapport à la tête laser 5 selon la trajectoire de coupe désirée. La solution inverse consistant à bouger la tête de coupe en conservant la pièce statique conduit au même résultat.

Les valeurs des autres paramètres (Zr, BPP, angles...) sont données dans le Tableau suivant.

Tableau

| Epaisseur E | Longueur focale | Diamètre de fibre | θ | α | a +θ | diamètre du spot focalisé | Zr | Densité de puissance | BPP |
|---|---|---|---|---|---|---|---|---|---|
| (mm) | (mm) | (μm) | (°) | (°) | (°) | (mm) | (mm) | (MW/cm$^2$) | (mm.mrad) |
| 1.5 | 127 | 50 | 1.5 | 5.7 | 7.2 | 0.15 | 2.8 | 11.5 | 2 |
| 2 | 127 | 50 | 1.5 | 4.6 | 6.1 | 0.16 | 3 | 10 | 2.1 |
| 2 | 190.5 | 50 | 1 | 5.9 | 6.9 | 0.21 | 5.8 | 6 | 1.8 |
| 4 | 95.25 | 100 | 2.2 | 3.2 | 5.4 | 0.22 | 2.9 | 5.2 | 4.3 |
| 4 | 127 | 100 | 1.7 | 4 | 5.7 | 0.28 | 4.8 | 3.2 | 4.1 |
| 4 | 190.5 | 100 | 1.4 | 4.9 | 6.3 | 0.34 | 6.9 | 2.1 | 4.3 |
| 6 | 228.6 | 100 | 1.2 | 3.9 | 5.1 | 0.40 | 9.8 | 1.5 | 4.2 |

Les essais de découpe ont été réalisés sur des pièces en acier inoxydable ayant des épaisseurs comprises entre 1,5 mm et 6 mm.

Le gaz utilisé est de l'azote et est injecté dans la zone d'interaction du faisceau avec la pièce à des pressions variables comprises entre 0.6 et 25 bar, à travers une buse de découpe laser présentant une orifice de diamètre de 1.5 pour les épaisseurs 1.5 et 2 et de 2 mm pour les épaisseurs 4 et 6 mm.

Les résultats obtenus ayant donné de bons résultats en termes de qualité de coupe ont été positionnés sur la Figure 4. On voit que la courbe extrapolée à partir des points de résultats obtenus met en évidence qu'il existe une relation étroite entre la somme des angles (α + θ) (en ordonnées) et l'épaisseur (E) de la pièce à couper (en abscisses).

Dit autrement, les résultats obtenus montrent que la découpe avec une source de faisceau laser de type à « fibre » d'ytterbium, de longueur d'onde de 1.07 $\mu$m, ne sont satisfaisants que si tout ou partie des conditions suivantes sont réunies :

- la puissance du faisceau est comprise entre 1 et 100 kW.
- la densité de puissance focalisée est d'au moins 1 MW/cm$^2$, de préférence comprise entre 1 MW/cm$^2$ et 100 MW/cm$^2$, avantageusement d'au moins 3 MW/cm$^2$, voire d'au moins 3,2 MW/cm$^2$.
- le diamètre du faisceau laser focalisé ($\Phi$) est d'au moins 0,1 mm, de préférence de 0.15 à 0.3 mm.
- le facteur de qualité (BPP) est inférieur à 10 mm.mrad, de préférence de 1.5 à 6 mm.mrad.
- la somme des angles ($\alpha + \theta$) doit suivre la courbe d'évolution suivante, à savoir un angle compris entre 1° et 8°, pour des plaques d'épaisseurs comprises entre 1 mm et 15 mm.
- la longueur de Raleigh Zr est comprise entre 0.1 mm et 40 mm, avantageusement, on choisit une valeur pour Zr correspondant au moins à la moitié de l'épaisseur E de la tôle à couper

Ainsi, à titre d'exempte, on peut citer les deux derniers jeux de paramètres présentés dans le tableau qui ont donnés des coupes présentant des bavures. L'analyse montre qu'ils ne vérifient pas les critères susmentionnés, en particulier une non-correspondance entre l'angle ($\alpha + \theta$) et l'épaisseur coupée, et une densité de puissance trop faible.

## Revendications

1. Procédé de coupage par faisceau laser (3) d'une pièce (10) à couper, dans lequel on utilise des moyens de génération de faisceau laser (1) comprenant au moins une fibre contenant de l'ytterbium ayant une longueur d'onde entre 1 et 4 $\mu$m pour générer le faisceau laser (3) d'une puissance comprise entre 0.1 et 40 kW, **caractérisé en ce que** ledit faisceau laser (3) est sélectionné de manière à présenter :

   - une densité de puissance entre 1,5 et 20 MW/cm$^2$.
   - un diamètre de faisceau focalisé compris entre 0,1 mm et 0.50 mm et
   - un facteur de qualité (BPP) entre 2 et 8 mm.mrad.

2. Procédé selon la revendication 1, **caractérisé en ce que** la fibre est formée d'un coeur dopé à l'ytterbium recouvert de silice.

3. Procédé selon l'une des revendications 1 ou 2, **caractérisé en ce que** le faisceau laser (3) généré par la fibre à base d'ytterbium a une longueur d'onde entre 1.04 et 3 $\mu$m, de préférence de 1.07 $\mu$m.

4. Procédé selon l'une des revendications 1 à 3, **caractérisé en ce que** le faisceau laser (3) généré par la fibre à base d'ytterbium a une longueur d'onde de 1.07 $\mu$m.

5. Procédé selon l'une des revendications 1 à 4, **caractérisé en ce que** le facteur de qualité du laser (BPP) est compris entre 2 et 6 mm.mrad.

6. Procédé selon l'une des revendications 1 à 5, **caractérisé en ce que** le faisceau laser (3) a une puissance comprise entre 0.5 et 15 kW.

7. Procédé selon l'une des revendications 1 à 6, **caractérisé en ce que** le diamètre de faisceau (3) focalisé est compris entre 0,13 mm et 0,40 mm.

8. Procédé selon l'une des revendications 1 à 7, **caractérisé en ce que** le faisceau laser (3) a une valeur de longueur de Raleigh (Zr) comprise entre 1 et 10 mm, de préférence entre 2 et 7 mm.

9. Procédé selon l'une des revendications 1 à 8, **caractérisé en ce que** l'on met en oeuvre le faisceau (3) selon une ouverture angulaire ($\theta$) compris entre 0,25 et 5°, et un angle $\alpha$ entre 1,25 et 8° correspondant à l'angle définit par le diamètre du faisceau laser (3) focalisé ($2W_0$) divisé par l'épaisseur (E) de la pièce (10), tels que la somme des angles ($\alpha + 0$) soit comprise entre 1,5 et 8°.

10. Procédé selon l'une des revendications 1 à 9, **caractérisé en ce que** le gaz d'assistance du faisceau laser (3) est choisi parmi l'azote, l'hélium, l'argon, l'oxygène, le $CO_2$ et leurs mélanges, et éventuellement, il contient, en outre, un ou plusieurs composés additionnels choisis parmi $H_2$ et $CH_4$.

11. Procédé selon l'une des revendications 1 à 10, **caractérisé en ce que** la pièces (10) à couper à une épaisseur entre 0.25 et 30 mm, de préférence entre 0.40 et 20 mm.

**Claims**

1. Method of cutting a workpiece (10) with a laser beam (3), in which laser beam generation means (1) comprising at least one ytterbium-containing fiber, having a wavelength between 1 and 4 $\mu$m, are used to generate the laser beam with a power of between 0.1 and 40 kW, **characterized in that** said laser beam (3) is selected so as to have:

   - a power density of between 1.5 and 20 $MW/cm^2$;
   - a focused beam diameter of between 0.1 mm and 0.50 mm and
   - a quality factor (BPP) of between 2 and 8 mm.mrad.

2. Method according to Claim 1, **characterized in that** the fiber is formed from an ytterbium-doped core clad with silica.

3. Method according to either of Claims 1 and 2, **characterized in that** the laser beam (3) generated by the ytterbium-based fiber has a wavelength of between 1.04 and 3 $\mu$m, preferably of 1.07 $\mu$m.

4. Method according to one of Claims 1 to 3, **characterized in that** the laser beam (3) generated by the ytterbium-based fiber has a wavelength of 1.07 $\mu$m.

5. Method according to one of Claims 1 to 4, **characterized in that** the quality factor (BPP) of the laser is between 2 and 6 mm.mrad.

6. Method according to one of Claims 1 to 5, **characterized in that** the laser beam (3) has a power of between 0.5 and 15 kW.

7. Method according to one of Claims 1 to 6, **characterized in that** the focused beam (3) diameter is between 0.13 and 0.40 mm.

8. Method according to one of Claims 1 to 7, **characterized in that** the laser beam (3) has a Raleigh length (Zr) of between 1 and 10 mm, preferably between 2 and 7 mm.

9. Method according to one of Claims 1 to 8, **characterized in that** the beam (3) is used with an angular aperture ($\theta$) of between 0.25° and 5° and an angle $\alpha$ of between 1.25° and 8°, corresponding to the angle defined by the diameter ($2W_0$) of the focused laser beam divided by the thickness (E) of the workpiece (10), these being such that the sum of the angles ($\alpha + \theta$) is between 1.5° and 8°.

10. Method according to one of Claims 1 to 9, **characterized in that** the assist gas for the laser beam (3) is chosen from nitrogen, helium, argon, oxygen, $CO_2$ and mixtures thereof, and it optionally also contains one or more additional compounds chosen from $H_2$ and $CH_4$.

11. Method according to one of Claims 1 to 10, **characterized in that** the workpiece (10) to be cut has a thickness of between 0.25 and 30 mm, preferably between 0.40 and 20 mm.

**Patentansprüche**

1. Verfahren zum Schneiden mittels eines Lasers (3) eines zu schneidenden Teils (10), wobei Mittel (1) zur Erzeugung eines Laserstrahls verwendet werden, umfassend mindestens eine Ytterbium enthaltende Faser mit einer Wellenlänge zwischen 1 und 4 $\mu$m, um den Laserstrahl (3) mit einer Leistung zwischen 0,1 und 40 kW zu erzeugen, **dadurch gekennzeichnet, dass** dieser Laserstrahl (3) gewählt wird, um aufzuweisen:

   - eine Leistungsdichte zwischen 1,5 und 20 $MW/cm^2$,
   - einen fokussierten Strahldurchmesser zwischen 0,1 mm und 0,50 mm, und

- einen Qualitätsfaktor (BPP) zwischen 2 und 8 mm.mrad.

2. Verfahren nach Anspruch 1, **dadurch gekennzeichnet, dass** die Faser aus einem mit Ytterbium dotierten Kern besteht, der mit Silizium überzogen ist.

3. Verfahren nach einem der Ansprüche 1 oder 2, **dadurch gekennzeichnet, dass** der Laserstrahl (3), der von der Faser auf Ytterbiumbasis erzeugt wird, eine Wellenlänge zwischen 1,04 und 3 $\mu$m, bevorzugt von 1,07 $\mu$m aufweist.

4. Verfahren nach einem der Ansprüche 1 bis 3, **dadurch gekennzeichnet, dass** der Laserstrahl (3), der von der Faser auf Ytterbiumbasis erzeugt wird, eine Wellenlänge von 1,07 $\mu$m aufweist.

5. Verfahren nach einem der Ansprüche 1 bis 4, **dadurch gekennzeichnet, dass** der Qualitätsfaktor des Lasers (BPP) zwischen 2 und 6 mm.mrad liegt.

6. Verfahren nach einem der Ansprüche 1 bis 5, **dadurch gekennzeichnet, dass** der Laserstrahl (3) eine Leistung zwischen 0,5 und 15 kW hat.

7. Verfahren nach einem der Ansprüche 1 bis 6, **dadurch gekennzeichnet, dass** der fokussierte Strahldurchmesser (3) zwischen 0,13 mm und 0,40 mm liegt.

8. Verfahren nach einem der Ansprüche 1 bis 7, **dadurch gekennzeichnet, dass** der Laserstrahl (3) einen Raleigh-Längewert (Zr) zwischen 1 und 10 mm, bevorzugt zwischen 2 und 7 mm, hat.

9. Verfahren nach einem der Ansprüche 1 bis 8, **dadurch gekennzeichnet, dass** der-Laserstrahl (3) mit einem Öffnungswinkel ($\theta$) zwischen 0,25 und 5° und mit einem Winkel $\alpha$ zwischen 1,25 und 8°, der dem Winkel entspricht, der definiert wird durch den Durchmesser ($2W_0$) des fokussierten Laserstrahls (3) dividiert durch die Dicke (E) des Teils (10), derart hergestellt wird, dass die Summe der Winkel ($\alpha + \theta$) zwischen 1,5 und 8° liegt.

10. Verfahren nach einem der Ansprüche 1 bis 9, **dadurch gekennzeichnet, dass** das Hilfsgas des Laserstrahls (3) aus Stickstoff, Helium, Argon, Sauerstoff, $CO_2$ und deren Gemischen gewählt wird und eventuell außerdem eine oder mehrere zusätzliche Verbindungen enthält, die aus $H_2$ und $CH_4$ gewählt werden.

11. Verfahren nach einem der Ansprüche 1 bis 10, **dadurch gekennzeichnet, dass** das zu schneidende Teil (10) eine Dicke zwischen 0,25 und 30 mm, bevorzugt zwischen 0,40 und 20 mm, hat.

**FIGURE 1**

**FIGURE 2**

FIGURE 3

FIGURE 4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102004024475 A
- US 2003199859 A
- US 73695S2 A
- US 6723090 A
- US 6181463 A

**Littérature non-brevet citée dans la description**

- **F. Dausinger.** Laser with different wavelength - implication for various application. *3rd Conference on Laser Treatment of Materials,* vol. 1, 1-14